# EUROPÄISCHE PATENTSCHRIFT

(11) **EP 2 545 696 B1**
(45) Veröffentlichungstag und Bekanntmachung des Hinweises auf die Patenterteilung: **20.04.2016**
(21) Anmeldenummer: 11705517.8
(22) Anmeldetag: 21.02.2011
(51) Int. Cl.: G01V 8/12, G03B 13/18, H04N 5/232, H04N 5/235, H04N 7/14, G02B 27/00, G06F 1/16

(54) **PORTABLES ELEKTRONISCHES GERÄT**
PORTABLE ELECTRONIC DEVICE
APPAREIL ÉLECTRONIQUE PORTABLE

(30) Priorität: 11.03.2010 DE 102010011029
(43) Veröffentlichungstag der Anmeldung: 16.01.2013
(73) Patentinhaber: OSRAM Opto Semiconductors GmbH, 93055 Regensburg (DE)
(72) Erfinder: BRANDL, Michael, 93098 Mintraching (DE); FISCHL, Roland, 93047 Regensburg (DE)
(74) Vertreter: Epping - Hermann - Fischer
(86) Internationale Anmeldenummer: PCT/EP2011/052530
(87) Internationale Veröffentlichungsnummer: WO 2011/110418

(56) Entgegenhaltungen:
- WO-A1-02/21502
- WO-A1-2009/115343
- GB-A- 2 295 740
- KR-A- 20080 022 331
- US-A- 4 716 469
- US-A1- 2006 132 431
- US-A1- 2009 256 814

## Beschreibung

Es wird ein portables elektronisches Gerät angegeben.

Die Druckschriften US 2006/132431 A1, US 2009/256814 A1, KR 2008 0022331 A und WO 02/21502 A1 beschreiben jeweils portable elektronische Geräte. Die Druckschrift WO 2009/115343 A1 beschreibt einen Sensor zur Überwachung eines Überwachungsbereichs. Die Druckschriften GB2295740 A und US 4,716,469 A beschreiben Systeme zum Augenschutz.

Eine zu lösende Aufgabe besteht darin, ein portables elektronisches Gerät anzugeben, das mit verbesserter Sicherheit betrieben werden kann.

Gemäß zumindest einer Ausführungsform handelt es sich bei dem portablen elektronischen Gerät um ein elektronisches Gerät, das von einem Benutzer ohne weitere Hilfsmittel bewegbar ist. Das heißt, das portable elektronische Gerät weist ein Gewicht auf, das so gering gewählt ist, dass der Benutzer das portable elektronische Gerät tragen kann. Bei dem portablen elektronischen Gerät handelt es sich beispielsweise um ein optisches Projektionsgerät, ein Mobiltelefon, ein Abspielgerät für Musik oder Video, einen Computer oder ähnliches. Das portable elektronische Gerät weist vorzugsweise ein Gewicht von kleiner 25 kg, insbesondere von kleiner 3 kg, bevorzugt von kleiner 1 kg auf.

Gemäß zumindest einer Ausführungsform des portablen elektronischen Geräts umfasst das elektronische Gerät eine Lichtquelle, die im Betrieb Licht abstrahlt. Die Lichtquelle strahlt im Betrieb beispielsweise farbiges oder weißes Licht ab. Die Lichtquelle umfasst dazu wenigstens eine Lumineszenzdiode. Beispielsweise kann die Lichtquelle aus einer oder mehrerer Lumineszenzdioden bestehen. Das heißt, das von der Lichtquelle im Betrieb abgestrahlte Licht wird von der oder den Lumineszenzdioden erzeugt. Bei der zumindest einen Lumineszenzdiode handelt es sich beispielsweise um eine Laserdiode oder bevorzugt um eine Leuchtdiode. Die Lichtquelle kann weiter eine Optik, wie zum Beispiel eine Linse umfassen. Die Optik ist der zumindest einen Lumineszenzdiode nachgeordnet, so dass ein Großteil der von der zumindest einen Lumineszenzdiode im Betrieb erzeugten elektromagnetischen Strahlung durch die Optik tritt. Die Optik kann zum Beispiel auch geeignet sein, eine Hauptabstrahlrichtung der elektromagnetischen Strahlung zu ändern.

Gemäß zumindest einer Ausführungsform umfasst das portable elektronische Gerät eine Vorrichtung zur Detektion eines Objekts im Strahlengang des von der Lichtquelle im Betrieb abgestrahlten Lichts. Das heißt, die Vorrichtung ist dazu eingerichtet zu erkennen, ob sich ein Objekt im Strahlengang der Lichtquelle befindet. Dieses Objekt wird vom Licht der Lichtquelle beleuchtet. Dabei ist es möglich, dass die Vorrichtung lediglich solche Objekte erkennt, welche sich in einer Hauptabstrahlrichtung der Lichtquelle im Strahlengang der Lichtquelle befinden. Die Hauptabstrahlrichtung ist dabei diejenige Richtung, in der das Licht von der Lichtquelle mit maximaler Intensität abgestrahlt wird. Die Detektion des Objekts im Strahlengang der Lichtquelle erstreckt sich dabei vorzugsweise lediglich auf einen relativ kleinen Bereich vor der Lichtquelle. Beispielsweise kann die Vorrichtung dazu eingerichtet sein, lediglich Objekte im Strahlengang der Lichtquelle zu erkennen, die sich in einem Abstand von höchstens 2 m, vorzugsweise höchstens 1 m zur Lichtquelle im Strahlengang befinden.

Gemäß zumindest einer Ausführungsform des portablen elektronischen Geräts ist die Vorrichtung dazu eingerichtet, den Lichtstrom des von der Lichtquelle im Betrieb abgestrahlten Lichts zu reduzieren, wenn das Objekt für eine Mindestdauer innerhalb eines Mindestabstands von der Lichtquelle im Strahlengang des von der Lichtquelle abgestrahlten Lichts detektiert wird. Das heißt, befindet sich ein Objekt für eine Mindestdauer innerhalb eines Mindestabstands im Strahlengang, so verringert die Vorrichtung die Helligkeit und/oder den Lichtstrom des von der Lichtquelle im Betrieb abgestrahlten Lichts bis hin zur vollständigen Abschaltung der Lichtquelle. Die Reduzierung des Lichtstroms oder das Abschalten der Lichtquelle erfolgt nach Eintreten der genannten Bedingung rasch, um ein Blenden oder eine Schädigung der Augen des Betrachters zu vermeiden. Zum Beispiel erfolgt die Reduzierung des Lichtstroms oder das Abschalten der Lichtquelle innerhalb zum Beispiel höchstens eine Sekunde, vorzugsweise innerhalb von höchstens einer Zehntelsekunde.

Die Mindestdauer beträgt dabei zum Beispiel wenigstens 2 s, vorzugsweise wenigstens 5 s, besonders bevorzugt wenigstens 10 s. Der Mindestabstand beträgt zum Beispiel höchstens 50 cm, vorzugsweise höchstens 30 cm, besonders bevorzugt höchstens 20 cm. Das heißt, befindet sich ein Objekt beispielsweise für länger als 10 s in einem Abstand von kleiner 20 cm im Strahlengang des von der Lichtquelle im Betrieb abgestrahlten Lichts, so verringert die Vorrichtung den Lichtstrom und/die Helligkeit des von der Lichtquelle im Betrieb abgestrahlten Lichts oder die Vorrichtung schaltet die Lichtquelle vollständig aus - was einer Reduzierung des Lichtstroms auf Null entspricht. Die tatsächlichen Werte für Mindestdauer und Mindestabstand können dabei von der Intensität des von der Lichtquelle abgestrahlten Lichts abhängen.

Gemäß zumindest einer Ausführungsform des portablen elektronischen Geräts umfasst das Gerät eine Lichtquelle, die zumindest eine Lumineszenzdiode umfasst und im Betrieb Licht abstrahlt und eine Vorrichtung zur Detektion eines Objekts im Strahlengang des von der Lichtquelle im Betrieb abgestrahlten Lichts, wobei die Vorrichtung dazu eingerichtet ist, den Lichtstrom des von der Lichtquelle im Betrieb abgestrahlten Lichts zu reduzieren, wenn das Objekt für eine Mindestdauer innerhalb eines Mindestabstands von der Lichtquelle im Strahlengang erkannt wird.

Zur Detektion des Objekts ist es zunächst ausreichend, dass die Vorrichtung dazu eingerichtet ist, zu erkennen, ob sich überhaupt ein Objekt im Strahlengang des von der Lichtquelle im Betrieb abgestrahlten Lichts befindet. Darüber hinaus ist es aber möglich, dass die Vorrichtung dazu eingerichtet ist, zu erkennen, um welches Objekt oder um welche Klasse von Objekten es sich bei dem Objekt im Strahlengang des von der Lichtquelle im Betrieb abgestrahlten Lichts handelt.

Insbesondere Leuchtdioden, die beispielsweise als Lichtquellen in einem Mobiltelefon als Videolicht oder Taschenlampe oder zur optischen Projektion Verwendung finden, werden aufgrund der raschen technologischen Entwicklung immer heller. Aus Sicherheitsgründen entscheiden sich daher viele Hersteller dafür, das portable elektronische Gerät, beispielsweise das Mobiltelefon, in dem die Lichtquelle Verwendung findet, mit einem Laser-Warnhinweis zu versehen oder das Gerät wird einer Risikogruppe zum Bespiel gemäß der Lampennorm IEC 62471 zugeordnet. Um nun auf solche Warnhinweise verzichten zu können und trotzdem ein portables elektronisches Gerät zur Verfügung zu stellen, das mit erhöhter Sicherheit - insbesondere für menschliche Augen - betrieben werden kann, macht das hier beschriebene portable elektronische Gerät von der Idee Gebrauch, eine Vorrichtung zu nutzen, welche den Lichtstrom und/oder die Helligkeit des von der Lichtquelle im Betrieb abgestrahlten Lichts reduzieren kann, um eine mögliche Gefährdung des menschlichen Betrachters zu verhindern. Ferner kann durch die hier beschriebenen Maßnahmen eine für den Anwender unangenehme Blendung vermieden werden, welche gegebenenfalls keine Gefährdung darstellt.

Gemäß zumindest einer Ausführungsform des portablen elektronischen Geräts umfasst die Vorrichtung zumindest einen Empfänger und zumindest einen Sender, wobei der Sender ein Signal aussendet und der Empfänger dazu eingerichtet ist, das am Objekt reflektierte Signal zu detektieren. Beispielsweise aus dem Laufzeitunterschied zwischen Aussenden des Signals und Empfangen des reflektierten Signals wird von der Vorrichtung dann der Abstand zwischen der Lichtquelle und dem vom Signal angestrahlten Objekt ermittelt. Die Strahlrichtung des Signals ist dabei so gewählt, dass sie zumindest mit der Hauptabstrahlrichtung des von der Lichtquelle im Betrieb abgestrahlten Lichts übereinstimmt, so dass auf diese Weise von der Vorrichtung ein Objekt im Strahlengang des von der Lichtquelle im Betrieb abgestrahlten Lichts detektiert werden kann. Die Vorrichtung kann ferner dazu eingerichtet sein, über weitere Unterschiede des ausgesandten und des reflektierten Signals, wie beispielsweise Unterschiede in der Intensität, der Amplitude und der Phase Eigenschaften des Objekts zu ermitteln.

Beispielsweise kann die Vorrichtung auf diese Weise zwischen einem menschlichen Gesicht oder einem menschlichen Auge und einer weißen Wand unterscheiden. Eine Reduzierung des Lichtstroms der Lichtquelle erfolgt dann nur, wenn es sich bei dem erkannten Objekt mit einer vorgebbaren Wahrscheinlichkeit um ein menschliches Gesicht oder Auge handelt.

Gemäß zumindest einer Ausführungsform des portablen elektronischen Geräts sendet der Sender das Signal im Ultraschallbereich und/oder im Infrarotbereich und/oder im Ultraviolettbereich aus. Das heißt, der Sender sendet ein Signal aus, das für Menschen nicht hörbar und/oder nicht sichtbar ist. Der oder die Empfänger der Vorrichtung sind dann entsprechend dazu eingerichtet, das jeweilige Signal zu detektieren. Insbesondere ist es möglich, dass die Vorrichtung mehrere, zum Beispiel zwei, Sender und mehrere, zum Beispiel zwei, Empfänger umfasst, die Signale unterschiedlicher Art aussenden und empfangen. Beispielsweise kann die Vorrichtung ein Ultraschall-Sender-Empfänger-System umfassen sowie ein Infrarot-Sender-Empfänger-System. Informationen beider Systeme können dann zu einer verbesserten Abschätzung des Abstandes zum Objekt und/oder zu einer verbesserten Detektion des Objekts Verwendung finden. Ferner für die Verwendung von zumindest zwei Systemen zu einer verbesserten Redundanz.

Gemäß zumindest einer Ausführungsform des portablen elektronischen Geräts finden für die Vorrichtung Empfänger und/oder Sender Verwendung, die ohnehin schon im Gerät vorhanden sind. Das Gerät wird dazu beispielsweise mit einer Steuerungs- und Auswerteschaltung versehen oder entsprechend umprogrammiert, so dass die im Gerät vorhandenen Komponenten zur Detektion des Objekts Verwendung finden können.

Gemäß zumindest einer Ausführungsform des portablen elektronischen Geräts umfasst die Vorrichtung einen Autofokusempfänger einer Autofokusvorrichtung des portablen elektronischen Geräts. Das heißt, das portable elektronische Gerät umfasst einen Empfänger, der im Gerät in einer Vorrichtung Verwendung findet, die dazu eingerichtet ist, bei der Bildaufzeichnung auf ein Motiv scharf zu stellen. Vorliegend wird dieser Empfänger auch für die Vorrichtung zur Detektion des Objekts im Strahlengang der Lichtquelle genutzt.

Gemäß zumindest einer Ausführungsform umfasst die Vorrichtung den Autofokussender einer Autofokusvorrichtung. In diesem Fall wird der Autofokussender für eine aktive Autofokusvorrichtung auch für die Vorrichtung zur Detektion eines Objekts im Strahlengang des von der Lichtquelle im Betrieb abgestrahlten Lichts genutzt. Bei dem Autofokussender kann es sich dann beispielsweise um einen Sender handeln, der ein Signal im Ultraschallbereich und/oder im Infrarotbereich und/oder im Ultraviolettbereich und/oder im sichtbar roten Spektralbereich aussendet.

Gemäß zumindest einer Ausführungsform des portablen elektronischen Geräts umfasst die Vorrichtung einen Bildsensor, der dazu eingerichtet ist, ein Bild des Objekts zu erfassen. Auch in diesem Fall wird mit dem Bildsensor eine Komponente des portablen elektronischen Geräts genutzt, die ohnehin schon im Gerät vorhanden sein kann. Beispielsweise umfasst der Bildsensor einen CCD-Chip, der im portablen elektronischen Gerät zur Aufzeichnung von Bildern und/oder Videos Verwendung findet. Das Objekt wird auf den Bildsensor abgebildet und dort als Bild erfasst.

Gemäß zumindest einer Ausführungsform des portablen elektronischen Geräts umfasst die Vorrichtung eine Bilderkennungsvorrichtung, die dazu eingerichtet ist, das Bild auszuwerten und das Objekt zu erkennen. In diesem Fall kann die Vorrichtung auch ohne einen Sender Verwendung finden, der ein Signal aussendet. Über die Bilderkennungsvorrichtung kann die Vorrichtung beispielsweise dazu eingerichtet sein, das Objekt insoweit zu erkennen, dass zwischen beispielsweise einem menschlichen Gesicht oder Auge und einer weißen Wand unterschieden werden kann. Die Vorrichtung kann dann den Abstand zwischen der Lichtquelle und dem Objekt anhand der Größe des Objekts im Bild abschätzen. Eine eigentliche Entfernungsmessung ist nicht notwendig, wenn beispielsweise mittels der Bilderkennungsvorrichtung erkannt wird, dass es sich um ein menschliches Gesicht oder Auge handelt, und unter Verwendung von Mittelwerten für die Größe menschlicher Gesichter oder Augen der Abstand zwischen der Lichtquelle und dem Betrachter anhand der Größe des menschlichen Gesichts oder Auges im Bild abgeschätzt werden kann.

Gemäß zumindest einer Ausführungsform des portablen elektronischen Geräts bildet die Lichtquelle des portablen elektronischen Geräts einen Sender der Vorrichtung. Das vom Objekt reflektierte Licht der Lichtquelle kann dann beispielsweise von einem Bildsensor erfasst werden, der ebenso wie die Lichtquelle bereits im portablen elektronischen Gerät vorhanden sein kann. Beispielsweise finden für die Vorrichtung also das Videolicht und der CCD-Chip des elektronischen Geräts Verwendung.

Gemäß zumindest einer Ausführungsform des portablen elektronischen Geräts umfasst die Vorrichtung zumindest zwei unabhängig voneinander betreibbare Sender und/oder zumindest zwei unabhängig voneinander betreibbare Empfänger. Das heißt, bei der Vorrichtung handelt es sich um ein redundantes System das über zumindest zwei unabhängig voneinander betreibbare Einzelsysteme verfügt, die zur Detektion und/oder Detektion des Objekts eingerichtet sind. Auf diese Weise kann sichergestellt werden, dass die Vorrichtung mit einer großen Ausfallsicherheit betrieben werden kann.

Im Folgenden wird das hier beschriebene portable elektronische Gerät anhand von Figuren und den dazugehörigen Ausführungsbeispielen näher erläutert.

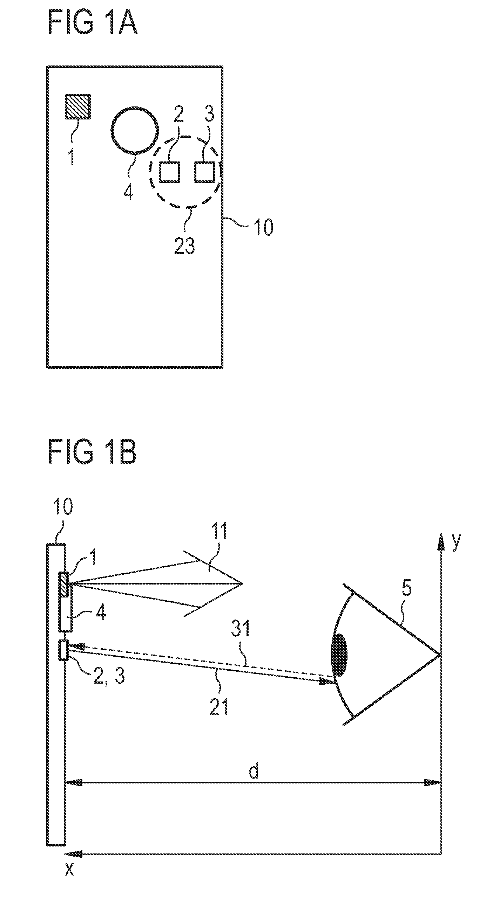

Die Figuren 1A, 1B, 2A, 2B, 3A, 3B, 4A, 4B, 5A und 5B zeigen dazu schematische Darstellungen, anhand derer Ausführungsbeispiele von hier beschriebenen portablen elektronischen Geräten näher erläutert werden.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

Die Figur 1A zeigt eine schematische Draufsicht auf ein hier beschriebenes portables elektronisches Gerät 10. Die Figur 1B zeigt eine schematische Schnittdarstellung des Geräts 10. Im Ausführungsbeispiel der Figuren 1A, 1B umfasst das portable elektronische Gerät 10 eine Lichtquelle 1, die beispielsweise durch eine Leuchtdiode gebildet ist. Im Betrieb der Lichtquelle 1 strahlt diese Licht 11 ab.

Das Gerät 10 umfasst beispielsweise einen Bildsensor 4, der zum Beispiel einen CCD-Chip umfasst. Bei dem portablen elektronischen Gerät 10 kann es sich zum Beispiel um ein Mobiltelefon mit Kamera handeln.

Das Gerät 10 umfasst ferner eine Vorrichtung 23, mit der ein Objekt 5 im Strahlengang des Lichts 11 der Lichtquelle 1 erkannt werden kann. Die Vorrichtung 23 umfasst vorliegend einen Sender 2 und einen Empfänger 3. Im Betrieb sendet der Sender 2 ein Signal 21 in Richtung vom Gerät 10 weg. Die Richtung, mit der das Signal 21 gesendet wird, ist dabei so gewählt, dass das Signal 21 auf ein Objekt 5 im Strahlengang des Lichts 11 trifft. Vom Objekt 5 wird das Signal reflektiert. Das reflektierte Signal 31 trifft auf den Empfänger 3.

Das gesendete Signal 21 und das reflektierte Signal 31 sind dabei zum Beispiel Ultraschall-Signale, Infrarot-Signale oder Ultraviolett-Signale. Sender 2 und Empfänger 3 sind entsprechend gewählt.

Aus dem Unterschied zwischen dem gesendeten Signal 21 und dem reflektierten Signal 31 kann die Vorrichtung 23 dann beispielsweise den Abstand x zwischen dem Objekt 5 und der Lichtquelle 1 ermitteln. Beispielsweise wird der Abstand aus dem Laufzeitunterschied zwischen Aussenden des Signals 21 und Empfangen des reflektierten Signals 31 berechnet. Weitere Unterschiede zwischen dem ausgesandten Signal 21 und dem reflektierten Signal 31 können zur weiteren Bestimmung des Objekts durch die Vorrichtung 23 dienen. Unterschreitet das Objekt 5 für eine bestimmte Mindestdauer von beispielsweise 10 s einen Mindestabstand d zur Lichtquelle 1, so verringert die Vorrichtung 23 den Lichtstrom des von der Lichtquelle 1 im Betrieb abgestrahlten Lichts 11.

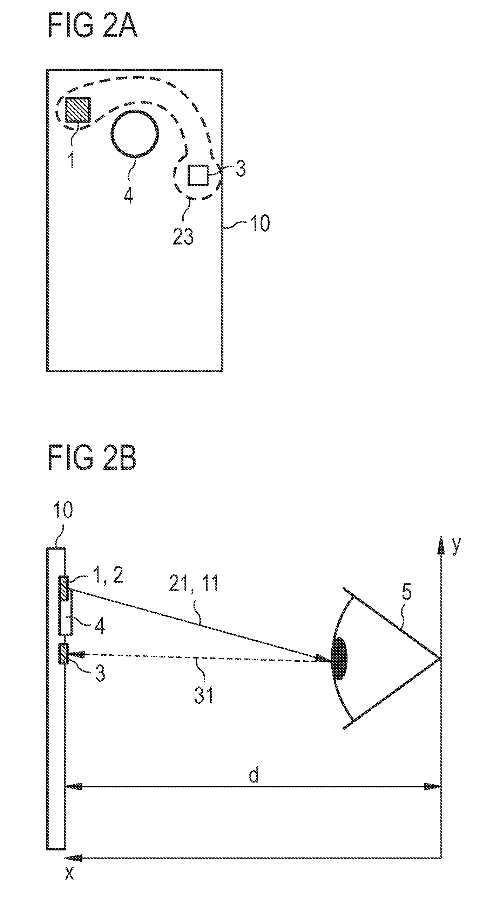

In Verbindung mit den Figuren 2A und 2B ist anhand schematischer Darstellungen ein weiteres Ausführungsbeispiel eines hier beschriebenen portablen elektronischen Geräts näher beschrieben. Im Unterschied zum Ausführungsbeispiel der Figuren 1A und 1B umfasst das Gerät 10 in diesem Ausführungsbeispiel keinen Sender. Vielmehr findet als Sender 2 die Lichtquelle 1 selbst Verwendung. Das heißt, das gesendete Signal 21 ist das von der Lichtquelle 1 im Betrieb ausgestrahlte Licht 11, das vom Empfänger 3 als reflektiertes Signal 31 empfangen wird.

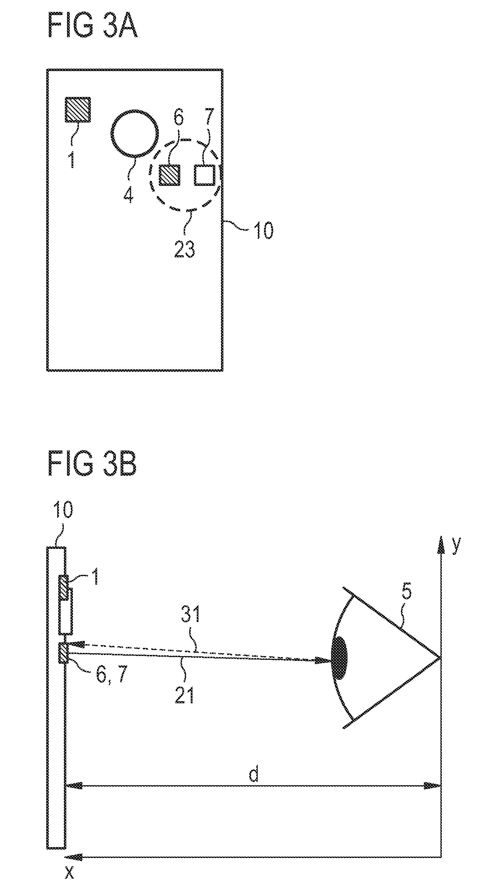

In Verbindung mit den Figuren 3A und 3B ist ein weiteres Ausführungsbeispiel eines hier beschriebenen portablen elektronischen Geräts 10 näher erläutert. In diesem Ausführungsbeispiel umfasst die Vorrichtung 23 einen Autofokussender 6 und einen Autofokusempfänger 7. Das heißt, beispielsweise im Unterschied oder zur Ergänzung des Ausführungsbeispiels gemäß den Figuren 1A und 1B finden Komponenten der Autofokus-Vorrichtung des Geräts 10 zur Detektion des Objekts 5 im Strahlengang der Lichtquelle 1 Verwendung. Zusätzlich kann eine Detektion des Objekts im Strahlengang des Lichts 11 der Lichtquelle 1 auch durch die in Verbindung mit den Figuren 1A, 1B und/oder 2A, 2B beschriebenen Maßnahmen erfolgen, so dass die Vorrichtung mehrere Sender und Empfänger umfasst, die unabhängig voneinander betrieben werden können.

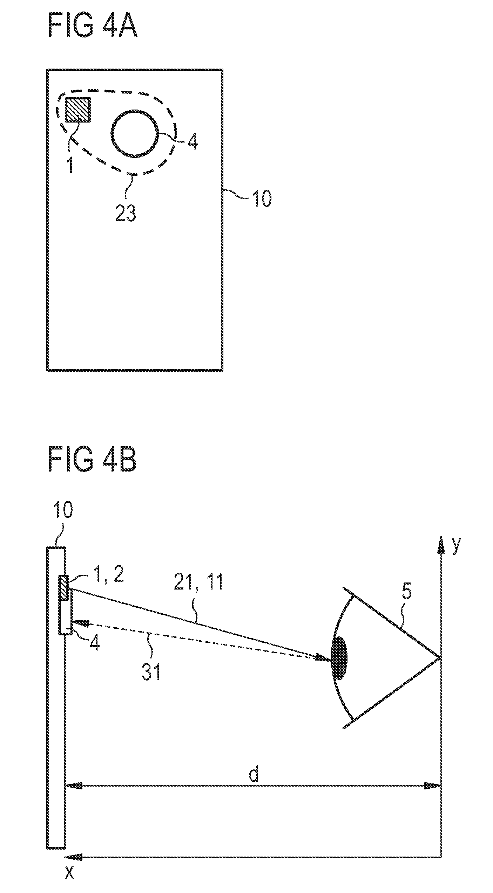

Im in Verbindung mit den Figuren 4A und 4B anhand schematischer Darstellungen beschriebenen Ausführungsbeispiele des Geräts 10 erfolgt eine Detektion des Objekts 5 im Strahlengang des von der Lichtquelle 1 im Betrieb erzeugten Lichts 11 durch eine Vorrichtung 23, welche die Lichtquelle 1 und den Bildsensor 4 umfasst. In diesem Fall kann - wenn es sich bei dem portablen elektronischen Gerät 10 um ein Gerät handelt, das ohnehin schon die Lichtquelle 1 und den Bildsensor umfasst, auf weitere Sensoren und Empfänger vollständig verzichtet werden. Die Bestimmung des Abstands x zwischen der Lichtquelle 1 und dem Objekt 5 erfolgt dann beispielsweise durch die Bestimmung des Laufzeitunterschieds zwischen Aussenden des Lichts 11 und Empfangen des reflektierten Lichts durch den Bildsensor 4. Die Lichtquelle 1 kann dazu für den menschlichen Betrachter nicht wahrnehmbar gepulst betrieben werden, so dass die einzelnen Lichtpulse als gesendete Signale 21 zur Detektion des Objekts im Strahlengang des Lichts 11 genutzt werden können.

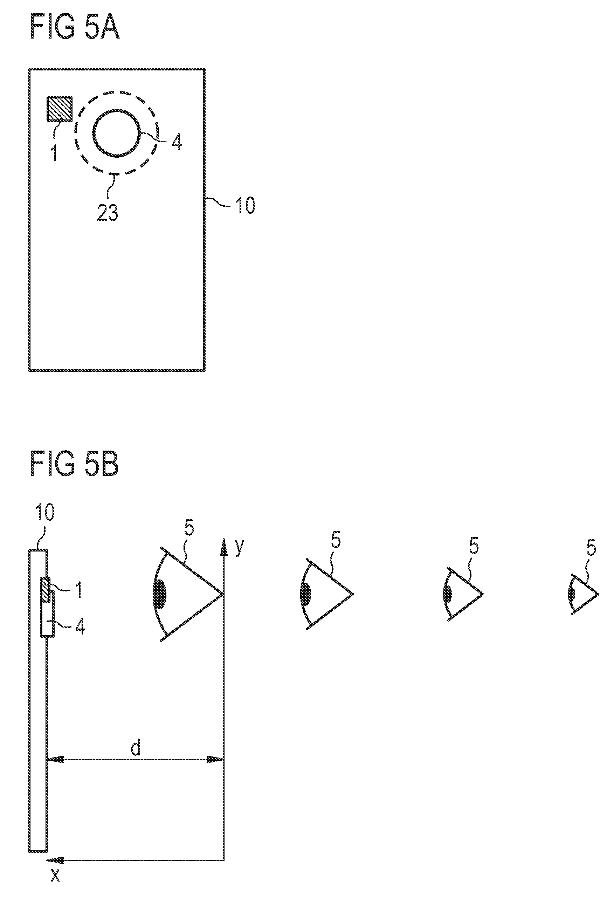

Im Ausführungsbeispiel, das in Verbindung mit den Figuren 5A und 5B näher beschrieben ist, erfolgt die Detektion des Objekts 5 mit Hilfe einer Bilderkennungsvorrichtung. Der Bildsensor 4 ist dazu eingerichtet, ein Bild des Objektes 5 zu erfassen, die Bilderkennungsvorrichtung ist dann dazu eingerichtet, das Bild auszuwerten und das Objekt zu erkennen. Über die Größe des Objekts 5 im Bild wird dann der Abstand x zwischen der Lichtquelle 1 und dem Objekt 5 abgeschätzt.

Wird diese Maßnahme zur Detektion des Objektes 5 in Verbindung mit der in Verbindung mit den Figuren 4A und 4B beschriebenen Vorrichtung zur Detektion des Objekts 5 genutzt, so kann auf besonders einfache Weise ein redundantes System zur Detektion des Objekts im Strahlengang des Lichts 11 angegeben werden, für das es nicht notwendig ist, weitere Sensoren oder Empfänger im portablen elektronischen Gerät anzubringen.

## Patentansprüche

1. Portables elektronisches Gerät (10) mit
- einer Lichtquelle (1), die zumindest eine Lumineszenzdiode umfasst und im Betrieb Licht (11) abstrahlt, und
- einer Vorrichtung (23) zur Detektion eines Objekts (5) im Strahlengang des von der Lichtquelle im Betrieb abgestrahlten Lichts (11), **dadurch gekennzeichnet, dass**
- die Vorrichtung (23) dazu eingerichtet ist, den Lichtstrom des von der Lichtquelle im Betrieb abgestrahlten Lichts (11) zu reduzieren, wenn das Objekt (5) für eine Mindestdauer innerhalb eines Mindestabstands (d) von der Lichtquelle (1) im Strahlengang detektiert wird.

2. Portables elektronisches Gerät nach dem vorherigen Anspruch,
bei dem die Vorrichtung (23) zumindest zwei unabhängig voneinander betreibbare Empfänger (3, 4, 7) umfasst.

3. Portables elektronisches Gerät nach einem der vorherigen Ansprüche,
bei dem die Vorrichtung (23) den Autofokusempfänger (7) einer Autofokus-Vorrichtung umfasst.

4. Portables elektronisches Gerät nach einem der vorherigen Ansprüche,
bei dem die Vorrichtung (23) den Autofokussender (6) einer Autofokus-Vorrichtung umfasst.

5. Portables elektronisches Gerät nach einem der vorherigen Ansprüche,
bei dem die Vorrichtung (23) einen Bildsensor (4) umfasst, der dazu eingerichtet ist, ein Bild des Objekts (5) zu erfassen.

6. Portables elektronisches Gerät nach dem vorherigen Anspruch,
bei dem die Vorrichtung (23) eine Bilderkennungsvorrichtung umfasst, die dazu eingerichtet ist, das Bild auszuwerten und das Objekt (5) zu erkennen.

7. Portables elektronisches Gerät nach dem vorherigen Anspruch,
bei dem die Vorrichtung (23) dazu eingerichtet ist, den Abstand (x) zwischen der Lichtquelle (1) und dem Objekt (5) anhand der Größe des Objekts (5) im Bild abzuschätzen.

8. Portables elektronisches Gerät nach einem der vorherigen Ansprüche,
bei dem die Vorrichtung (23) die Lichtquelle (1) als einen Sender umfasst.

9. Portables elektronisches Gerät nach einem der vorherigen Ansprüche,
bei dem die Vorrichtung (23) zumindest zwei unabhängig voneinander betreibbare Sender (2, 1, 6) umfasst.

10. Portables elektronisches Gerät nach einem der vorherigen Ansprüche,
bei dem die Lumineszenzdiode eine Leuchtdiode ist.

11. Portables elektronisches Gerät nach einem der vorherigen Ansprüche,
bei dem das Objekt (5) ein menschliches Gesicht oder Auge ist.

12. Portables elektronisches Gerät nach einem der vorherigen Ansprüche,
bei dem das portable elektronische Gerät ein Mobiltelefon ist.

## Claims

1. Portable electronic device (10) comprising
- a light source (1), which comprises at least one luminescence diode and emits light (11) during operation, and
- an apparatus (23) for detecting an object (5) in the beam path of the light (11) emitted by the light source during operation, **characterized in that**
- the apparatus (23) is designed to reduce the luminous flux of the light (11) emitted by the light source during operation if the object (5) is detected for a minimum duration within a minimum distance (d) from the light source (1) in the beam path.

2. Portable electronic device according to the preceding claim,
wherein the apparatus (23) comprises at least two receivers (3, 4, 7) which can be operated independently of one another.

3. Portable electronic device according to either of the preceding claims,
wherein the apparatus (23) comprises the autofocus receiver (7) of an autofocus apparatus.

4. Portable electronic device according to any of the preceding claims,
wherein the apparatus (23) comprises the autofocus transmitter (6) of an autofocus apparatus.

5. Portable electronic device according to any of the preceding claims,
wherein the apparatus (23) comprises an image sensor (4) designed to detect an image of the object (5).

6. Portable electronic device according to the preceding claim,
wherein the apparatus (23) comprises an image recognition apparatus designed to evaluate the image and to recognize the object (5).

7. Portable electronic device according to the preceding claim,
wherein the apparatus (23) is designed to estimate the distance (x) between the light source (1) and the object (5) on the basis of the size of the object (5) in the image.

8. Portable electronic device according to any of the preceding claims,
wherein the apparatus (23) comprises the light source (1) as a transmitter.

9. Portable electronic device according to any of the preceding claims,
wherein the apparatus (23) comprises at least two transmitters (2, 1, 6) which can be operated independently of one another.

10. Portable electronic device according to any of the preceding claims,
wherein the luminescence diode is a light emitting diode.

11. Portable electronic device according to any of the preceding claims,
wherein the object (5) is a human face or eye.

12. Portable electronic device according to any of the preceding claims,
wherein the portable electronic device is a mobile telephone.

## Revendications

1. Appareil électronique portable (10) comprenant
- une source de lumière (1) qui comprend au moins une diode luminescente et qui irradie de la lumière (11) en fonctionnement, et
- un dispositif (23) destiné à la détection d'un objet (5) dans le trajet du rayon de la lumière (11) irradiée par la source de lumière en fonctionnement, **caractérisé en ce que**
- le dispositif (23) est conçu pour réduire le flux de lumière de la lumière (11) irradiée par la source de lumière en fonctionnement lorsque l'objet (5) est détecté dans le trajet du rayon pendant une durée minimale à l'intérieur d'une distance minimale (d) de la source de lumière (1).

2. Appareil électronique portable selon la revendication précédente, avec lequel le dispositif (23) comprend au moins deux récepteurs (3, 4, 7) pouvant fonctionner indépendamment l'un de l'autre.

3. Appareil électronique portable selon l'une des revendications précédentes, avec lequel le dispositif (23) comprend le récepteur de mise au point automatique (7) d'un dispositif de mise au point automatique.

4. Appareil électronique portable selon l'une des revendications précédentes, avec lequel le dispositif (23) comprend l'émetteur de mise au point automatique (6) d'un dispositif de mise au point automatique.

5. Appareil électronique portable selon l'une des revendications précédentes, avec lequel le dispositif (23) comprend un capteur d'image (4) qui est conçu pour capturer une image de l'objet (5).

6. Appareil électronique portable selon l'une des revendications précédentes, avec lequel le dispositif (23) comprend un dispositif de reconnaissance d'image qui est conçu pour exploiter l'image et pour reconnaître l'objet (5).

7. Appareil électronique portable selon l'une des revendications précédentes, avec lequel le dispositif (23) est conçu pour estimer la distance (x) entre la source de lumière (1) et l'objet (5) dans l'image à l'aide de la taille de l'objet (5).

8. Appareil électronique portable selon l'une des revendications précédentes, avec lequel le dispositif (23) comprend la source de lumière (1) sous la forme d'un émetteur.

9. Appareil électronique portable selon l'une des revendications précédentes, avec lequel le dispositif (23) comprend au moins deux émetteurs (2, 1, 6) pouvant fonctionner indépendamment l'un de l'autre.

10. Appareil électronique portable selon l'une des revendications précédentes, avec lequel la diode luminescente est une diode électroluminescente.

11. Appareil électronique portable selon l'une des revendications précédentes, avec lequel l'objet (5) est un visage humain ou un oeil humain.

12. Appareil électronique portable selon l'une des revendications précédentes, avec lequel l'appareil électronique portable est un téléphone mobile.
